# EUROPEAN PATENT APPLICATION

(11) **EP 3 162 555 A1**
(43) Date of publication of application: **03.05.2017**
(21) Application number: 15811073.4
(22) Date of filing: 15.06.2015
(51) Int. Cl.: B32B 7/02, B32B 27/00, G01L 1/20

(54) **PRESSURE-RESPONSIVE LAMINATE, COATING LAYER AND PRESSURE RESPONSIVENESS-IMPARTING MATERIAL**

(30) Priority: 24.06.2014 JP 2014129280
(71) Applicant: NOK Corporation, Minato-ku Tokyo 105-8585 (JP)
(72) Inventor: HIGUMA Takahiro, Fujisawa-shi Kanagawa 251-0042 (JP); HIGASHIRA Toshihiro, Fujisawa-shi Kanagawa 251-0042 (JP)
(74) Representative: Nordic Patent Service A/S
(86) International application number: PCT/JP2015/067215
(87) International publication number: WO 2015/198906

(57) **Abstract**

An object of the present invention is to provide a pressure-sensitive responsive laminate excellent in durability at the repeated use, and further which can ensure change in resistance values at the unloaded time and at the time of applying a load with a large width, a coating layer which can be used for the pressure-sensitive responsive laminate, and a pressure-sensitive responsivity-imparting material which imparts pressure-sensitive responsivity to a conductive substrate, and the object can be solved by a pressure-sensitive responsive laminate which comprises a coating layer being laminated onto a conductive substrate, and unevenness derived from non-conductive particles included in the coating layer being formed onto a surface of the coating layer; a coating layer which comprises non-conductive particles, unevenness derived from the non-conductive particles being formed onto a surface thereof, and pressure-sensitive responsivity being imparted by being laminated onto a conductive substrate; and a pressure-sensitive responsivity-imparting material which comprises non-conductive particles, and imparts pressure-sensitive responsivity by being coated onto a conductive substrate.

## Description

### TECHNICAL FIELD

The present invention relates to a pressure-sensitive responsive laminate, a coating layer and a pressure-sensitive responsivity-imparting material, more specifically to a pressure-sensitive responsive laminate which is a pressure-sensitive responsible element changing an electric resistance depending on a pressure (which is also called as a load) to be applied, and has a shape of a laminate, a coating layer which can be used for the pressure-sensitive responsive laminate, and a pressure-sensitive responsivity-imparting material which imparts pressure-sensitive responsivity to a conductive substrate.

### BACKGROUND

As a conventional pressure-sensitive conductive elastomer composition, those obtained by mixing conductive particles with an insulating elastomer and molding have been known.

With regard to such a composition, an improved technique has been proposed, and a pressure responsivity is improved by changing the shape of the conductive particles (Patent Documents 1 and 2), or by using non-conductive particles as a filler (Patent Document 3).

### PRIOR ART DOCUMENTS

### PATENT DOCUMENTS

Patent Document 1: JP-A-1979-80350
Patent Document 2: JP-A-1978-79937
Patent Document 3: JP-A-2007-220481

### SUMMARY OF THE INVENTION

### PROBLEM TO BE SOLVED BY THE INVENTION

However, according to the conventional improved technique, it is necessary to use various kinds and large amounts of fillers to improve the pressure-sensitive characteristics, and in the actual formulation level, there are defects that the strength of the material itself becomes low so that durability at the time of repeated use is low.

Further, in the conventional improved technique, it is necessary to limit an amount of the conductive particles to exhibit pressure-sensitive characteristics, so that a resistance value during the time of conduction becomes high. Therefore, there is a defect that a width of change in the resistance value at the unloaded time and at the time of applying a load becomes small.

Thus, a subject of the present invention is to provide a pressure-sensitive responsive laminate excellent in durability at the repeated use, and which can ensure change in a resistance value at the unloaded time and at the time of applying a load with a large width, a coating layer which can be used for the pressure-sensitive responsive laminate and a pressure-sensitive responsivity-imparting material which imparts pressure-sensitive responsivity to a conductive substrate.

Also, the other problems of the present invention become clear by the following descriptions.

### MEANS FOR SOLVING PROBLEM

The above-mentioned problems are solved by the following respective inventions.

1. A pressure-sensitive responsive laminate which comprises a coating layer being laminated onto a conductive substrate, and unevenness derived from non-conductive particles included in the coating layer being formed onto a surface of the coating layer.

2. The pressure-sensitive responsive laminate according to 1, wherein the surface of the coating layer has a ten-point average roughness Rz in the range of 3 µm to 50 µm.

3. The pressure-sensitive responsive laminate according to 1 or 2, wherein the coating layer contains a silicone-based resin.

4. The pressure-sensitive responsive laminate according to any one of 1 to 3, wherein the conductive substrate contains a silicone rubber.

5. The pressure-sensitive responsive laminate according to any one of 1 to 4, wherein a hardness Hs of the conductive substrate is in the range of 40 to 90.

6. A coating layer which comprises non-conductive particles, unevenness derived from the non-conductive particles being formed onto a surface thereof, and pressure-sensitive responsivity being imparted by being laminated onto a conductive substrate.

7. A pressure-sensitive responsivity-imparting material which comprises non-conductive particles, and imparts pressure-sensitive responsivity by being coated onto a conductive substrate.

8. The pressure-sensitive responsivity-imparting material according to 7, wherein the material further comprises a liquid and/or a binder.

9. The pressure-sensitive responsivity-imparting material according to 7 or 8, wherein a concentration of a solid component is in the range of 10wt% to 20wt%.

### EFFECT OF THE INVENTION

According to the present invention, a pressure-sensitive responsive laminate excellent in durability at the repeated use, and which can ensure change in resistance values at the unloaded time and at the time of applying a load with a large width, a coating layer which can be used for the pressure-sensitive responsive laminate, and a pressure-sensitive responsivity-imparting material which imparts pressure-sensitive responsivity to a conductive substrate can be provided.

### BRIEF DESCRIPTION OF DRAWINGS

Fig. 1 is an enlarged cross sectional view of a main part explaining an example of a use form of a pressure-sensitive responsive laminate according to an embodiment of the present invention.
Fig. 2 is a schematic drawing explaining an evaluation apparatus of the F-R characteristics.
Fig. 3 is a schematic drawing explaining the shape of an electrode in the evaluation apparatus of Fig. 2.
Fig. 4 is a graph of initial F-R characteristics (Example).
Fig. 5 is a graph of initial F-R characteristics (Comparative example).
Fig. 6 is a graph of initial F-R characteristics (Comparative example).
Fig. 7 is a graph of initial F-R characteristics (Comparative example).
Fig. 8 is a graph of initial F-R characteristics (Comparative example).
Fig. 9 is a graph of F-R characteristics after repeated compression cycle (Example).
Fig. 10 is a graph of F-R characteristics after repeated compression cycle (Comparative example).

### DESCRIPTION OF THE PREFERRED EMBODIMENTS

In the following, the embodiments to carry out the present invention are explained.

The pressure-sensitive responsive laminate of the present invention is a pressure-sensitive responsible element changing an electric resistance depending on a pressure (which is also called as a load) to be applied, and has a shape of a laminate.

The pressure-sensitive responsive laminate is constituted by a coating layer containing non-conductive particles, and a conductive substrate.

By making it a laminate, it is possible to share the function by each constitutional element, i.e., an element which charges conductivity (a conductive substrate) and an element for imparting pressure-sensitive characteristics (a coating layer).

At the surface of the coating layer, unevenness derived from non-conductive particles contained in the coating layer is formed. At this time, the non-conductive particles may be in the state that these are directly exposed at the surface of the coating layer, or may be in the state that these are covered by a thin film of the binder, etc., and in either of the cases, the unevenness derived from non-conductive particles may be formed onto the surface of the coating layer. Particularly preferred is the state that the non-conductive particles are directly exposed at the surface of the coating layer, whereby a high resistance value is shown at the unloaded time, and change in the resistance values depending on the loads to be applied can be ensured with a larger width.

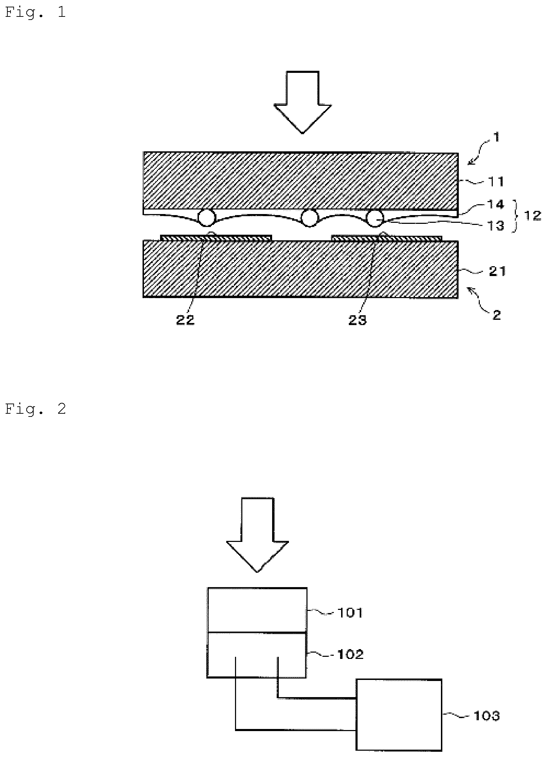

Fig. 1 is an enlarged cross sectional view of a main part explaining an example of a use form of the pressure-sensitive responsive laminate according to an embodiment of the present invention.

The numeral 1 is a pressure-sensitive responsive laminate, which is constituted by laminating a coating layer 12 onto the surface of a conductive substrate 11. In the example shown in the drawing, the coating layer 12 is constituted by non-conductive particles 13, and a binder 14 which retains the non-conductive particles 13. On the surface of the coating layer 12, unevenness derived from the non-conductive particles 13 is formed. Here, the non-conductive particles 13 are in the state directly exposed at the surface of the coating layer 12. The binder 14 has conductivity.

The numeral 2 is an electrode base, which comprises a pair of electrodes 22 and 23 on the surface of an insulating substrate 21.

The pressure-sensitive responsive laminate 1 and the electrode base 2 are so arranged that the coating layer 12 and a pair of electrodes 22 and 23 are opposed to each other.

From the state shown in the drawing, the pressure-sensitive responsive laminate 1 and the electrode base 2 are contacted, and further, the electrode base 2 is pressurized to the pressure-sensitive responsive laminate 1 and/or the pressure-sensitive responsive laminate 1 is pressurized to the electrode base 2, whereby a load is applied to the laminating direction of the pressure-sensitive responsive laminate 1.

At the unloaded time, a resistance value at the surface of the coating layer 12 (which is also called as the surface of the pressure-sensitive responsive laminate 1) is large. That is, even when a voltage is applied between a pair of electrodes 22 and 23 of the electrode base 2, a current is hard to flow.

On the other hand, at the time of applying a load, the non-conductive particles 13 are crushed and/or the non-conductive particles 13 are buried into the conductive substrate 11 side. According to this procedure, a contact area of the binder 14 having conductivity in the coating layer 12 and a pair of electrodes 22 and 23 is increased, and the resistance value is decreased.

At this time, depending on the degree of the load, the contact area is changed, and the resistance value is also changed accompanied thereby. If a potential is applied between the pair of electrodes 22 and 23, the change in the resistance value can be detected as the change in the current value. Accordingly, for example, a pressure sensor which is capable of measuring a degree of the load can be realized based on the detected current value.

It is difficult to impart unevenness to the surface with good precision even when a usual rubber molding method, etc., is employed, but in a laminated material, it is possible to impart unevenness with good precision to the conductive substrate by forming a coating layer as a separate layer using non-conductive particles. According to this constitution, pressure-sensitive responsivity excellent in precision can be obtained.

Further, by sharing the function to the conductive substrate and the coating layer, it is not necessary to use various kinds and large amounts of fillers as in the conventional techniques. According to the above, the strength as a material can be sufficiently ensured, and durability at the repeated use can be markedly improved. Also, in the conductive substrate, an amount of the conductive particles is not limited as in the conventional ones, a resistance value at the conduction can be lowered, and change in the resistance values at the unloaded time and at the time of applying a load can be also ensured with a larger width.

The coating layer can be formed by coating a pressure-sensitive responsivity-imparting material onto the surface of the conductive substrate. The pressure-sensitive responsivity-imparting material preferably has a form of a coating agent which can be coated.

The coating agent may contain at least non-conductive particles as a component necessary for formation of the coating layer.

The non-conductive particles are not particularly limited and may be suitably used, for example, ceramics particles such as silicon dioxide and alumina, insulating carbon particles, resin particles such as an acryl, a polystyrene, a polyethylene, a polypropylene, benzoguanamine and silicone, and among these, resin particles are preferred in the viewpoint of excellent in flexibility, in particular, silicone resin particles, etc., are preferred. The silicone resin particles may be used those commercially available as silicone powder, etc.

The non-conductive particles may be used one kind or two or more kinds in combination.

The volume resistivity of the non-conductive particles is preferably 1×10⁶ [Ω·cm] or more, more preferably 1×10¹⁰ [Ω·cm] or more.

The state of unevenness formed at the surface of the coating layer, i.e., the surface roughness can be optionally controlled by adjusting an amount of the non-conductive particles in the coating agent, or a coating amount of the coating agent, etc. The surface roughness Rz of the coating layer is preferably in the range of 3 µm to 50 µm, more preferably in the range of 7 µm to 30 µm. Here, the surface roughness Rz is a ten-point average roughness measured according to JIS B0601 by using a surface roughness state measuring machine.

The coating agent preferably contains a binder to retain the non-conductive particles in the coating layer. The binder can contribute to pressure-sensitive responsivity, and a conductive binder is preferably used.

The binder is not particularly limited and there may be preferably exemplified by, for example, a urethane resin, an acrylic resin, a silicone-based resin, etc., and among these, a silicone-based resin is preferred.

The silicone-based resin may be exemplified by, for example, a silicone-modified urethane resin and a silicone-modified acrylic resin, and a silicone-modified urethane resin, etc., is particularly suitable. In the silicone-modified urethane resin or the silicone-modified acrylic resin, the silicone-modified ratio is preferably in the range of 5 to 50 wt%.

The binder remains in the coating layer formed by the coating agent, and can exhibit the function to retain the non-conductive particles to the coating layer. In this point of view, it is preferred to select a material which can suitably ensure adhesiveness to the conductive substrate as the binder. For example, when a silicone-modified urethane resin is used as the binder, good adhesiveness to the conductive substrate comprising a silicone rubber can be obtained.

The binder preferably has conductivity, and a volume resistivity of the layer formed by the binder (a layer in the state that it does not contain non-conductive particles as mentioned above) is preferably smaller than a volume resistivity of the above-mentioned non-conductive particles, specifically 1×10⁵ [Ω·cm] or less is preferred and 1×10⁴ [Ω·cm] or less is more preferred.

The binder may be a material having conductivity by containing a component(s) having conductivity.

The component having conductivity which can be used may be mentioned, for example, a conductive material such as carbon black, graphite, potassium titanate, iron oxide, TiO₂, ZnO and SnO₂, and an ion conductive material such as a quaternary ammonium salt, a boric acid salt, a surfactant, a metal ion and a polyethylene oxide (PEO), etc.

When the component having conductivity is a particle, then the particle diameter is preferably smaller than the particle diameter of the non-conductive particles.

In addition, as the polymer constituting the binder, a conductive polymer having itself conductivity may be used. In this case, to impart the conductivity, use of the component having conductivity may be optionally omitted.

When the above-mentioned non-conductive particles themselves exhibit adhesiveness to the conductive substrate, for example, use of the binder may be optionally omitted. In this case, depending on the strength of the stress at the time of applying a load, pressure-sensitive responsivity can be obtained by changing the contact area of the conductive substrate to be contacted with the pair of the electrodes. However, in the viewpoints of improvement in durability and stabilization of the pressure-sensitive responsivity, it is more preferred to use the binder having conductivity as mentioned above.

The coating agent preferably contains a liquid in the viewpoints of improvement in the coating property to the conductive substrate and prevention of coating unevenness (aggregation of particles), etc.

The liquid is not particularly limited and may be preferably used, for example, water or an organic solvent, etc.

The organic solvent may be mentioned, for example, an alcohol such as methanol, ethanol and isopropyl alcohol, and a ketone such as acetone and methyl ethyl ketone, and among these, a ketone is preferred, in particular, methyl ethyl ketone is suitable.

A solid concentration of the coating agent is preferably in the range of 10wt% to 20wt%. If it is in the above range, the coating property at the time of coating can be more improved and coating unevenness (aggregation of particles) at the time of coating can be more suitably avoided.

A material of the conductive substrate is not particularly limited and may be preferably exemplified by, for example, a polymer or a metal, etc., and above all, a polymer is suitable.

When the polymer is used, it can be used by formulating a component having conductivity.

The polymer may be preferably exemplified by a resin and a rubber, etc., and in particular, a rubber is suitable.

The rubber may be exemplified by nitrile rubber (NBR), hydrogenated nitrile rubber (HNBR), acrylic rubber (ACM), ethylene acrylic rubber (AEM), styrene-butadiene rubber (SBR), silicone rubber (VMQ), fluororubber (FKM), ethylene-propylene rubber (EPDM), chloroprene rubber (CR), urethane rubber (U), butadiene rubber (BR), butyl rubber (IIR), isoprene rubber (IR), etc., and among these, ethylene-propylene rubber (EPDM), acrylic rubber (ACM), silicone rubber (VMQ), etc., may be preferably exemplified, in particular, silicone rubber (VMQ), etc., is suitable.

The polymer may be used one kind or two or more kinds in combination.

The component having conductivity may be used, for example, a conductive material such as carbon black, graphite, potassium titanate, iron oxide, TiO₂, ZnO and SnO₂, and an ion conductive material such as a quaternary ammonium salt, a boric acid salt, a surfactant, a metal ion and a polyethylene oxide (PEO), and among these, a conductive material is preferred, in particular, carbon black is suitable.

When a conductive polymer having itself conductivity is used as the polymer, addition of a component having conductivity may be optionally omitted.

A hardness Hs of the conductive substrate is preferably in the range of 40 to 90, more preferably in the range of 60 to 80. Here, the hardness Hs (Shore A) is a value measured by a Type A Durometer according to JIS K6253. By making the hardness in the above-mentioned range, the non-conductive particles are suitably buried in the conductive substrate side accompanied by applying the load, whereby more excellent pressure-sensitive responsivity can be obtained.

The conductive substrate to be used is that having conductivity, and the volume resistivity thereof is preferably smaller than the volume resistivity of the above-mentioned non-conductive particles, specifically 1×10⁵ [Ω·cm] or less is preferred and 1×10⁴ [Ω·cm] or less is more preferred.

The coating layer can be formed by coating the coating agent explained above onto the surface of the conductive substrate.

The coating film of the coating agent can be made a coating layer through additional processes, if necessary. The additional processes may be exemplified by, for example, a drying process, a curing process, a crosslinking process, etc. Here, the drying process is, for example, a process of evaporating the above-mentioned liquid (a solvent). Also, the curing process is, for example, a process of making a polymer by polymerizing a monomer(s) or an oligomer(s) to constitute the binder. Further, the crosslinking (vulcanization) process is, for example, a process of crosslinking the polymer(s) by a sulfur-based or a peroxide-based crosslinking agent. The additional processes are not limited by these examples.

As shown in Fig. 1, in an example of use forms of a pressure-sensitive responsive laminate 1, an electrode base 2 is so provided that it is opposed to the pressure-sensitive responsive laminate 1. It can be also said that a pressure-sensitive responsivity structure is constituted by the pressure-sensitive responsive laminate 1 and the electrode base 2.

In one aspect of the present invention, it is also preferred that the hardness of the insulating substrate 21 constituting the electrode base 2 or the pair of electrodes 22 and 23 is adjusted.

For example, when the hardness of the conductive substrate 11 of the pressure-sensitive responsive laminate 1 or the non-conductive particles 13 is high, it is possible to stabilize the pressure-sensitive responsivity by burying the non-conductive particles 13 at the electrode base side by setting the hardness of the insulating substrate 21 constituting the electrode base 2 or the pair of electrodes 22 and 23 low. That is, depending on the hardness of the conductive substrate 11 of the pressure-sensitive responsive laminate 1 or the non-conductive particles 13, it is possible to stabilize the pressure-sensitive responsivity by optionally adjusting the hardness of the insulating substrate 21 constituting the electrode base 2 or the pair of electrodes 22 and 23. For example, in the viewpoint of adjusting the hardness of the pair of electrodes 22 and 23, a material such as a metal, etc., may be used as the material having a relatively high hardness, and a material such as a polymer, etc., may be used as the material having a relatively low hardness. The polymer which can be preferably used may be mentioned a polymer into which a component having conductivity has been formulated or a conductive polymer, etc., and as the material of the conductive substrate, those mentioned above are preferably used.

In the above explanation, the constitution explained in one embodiment can be optionally applied to the other embodiments.

### EXAMPLES

In the following, Examples of the present invention are explained, but the present invention is not limited by these Examples.

### (Example 1)

### 1. Preparation of conductive substrate

The following composition for the conductive substrate was mixed and kneaded by an open roller, and press-crosslinked (vulcanization) (peroxide-crosslinking) by an exclusive die at 180°C for 4 minutes, to obtain a conductive substrate comprising a crosslinking (vulcanization) sheet having a thickness of 0.5 mm. The obtained conductive substrate showed a hardness Hs of 79.

**<Composition for conductive substrate>**

| | |
|---|---|
| •Silicone rubber for conduction (containing carbon black) "KE-3801M-U" available from Shin-Etsu Chemical Co., Ltd. | |
| | 100 parts by weight |
| •Crosslinking agent | |
| "C-8A" (2,5-dimethyl-2,5-bis(t-butylperoxy)hexane content: 80 wt%) available from Shin-Etsu Chemical Co., Ltd. | |
| | 1.0 part by weight |

### 2. Preparation of coating agent

The following composition for the coating agent was mixed in a glass apparatus and subjected to ultrasonic dispersion by an ultrasonic washing machine for 5 minutes to obtain a coating agent.

**<Composition for coating agent>**

| | |
|---|---|
| •Binder; Silicone-modified urethane resin | |
| "X-93-1549" available from Shin-Etsu Chemical Co., Ltd. | |
| | 10 parts by weight |
| "X-93-1248K" available from Shin-Etsu Chemical Co., Ltd. | |
| | 0.5 part by weight |
| "X-93-1249C" available from Shin-Etsu Chemical Co., Ltd. | |
| | 0.5 part by weight |
| •Non-conductive particles; Silicone powder | |
| "X-52-875" available from Shin-Etsu Chemical Co., Ltd. | |
| | 0.3 part by weight |
| •Liquid (solvent) | |
| Methyl ethyl ketone weight | 16.6 parts by |

### 3. Preparation of pressure-sensitive responsive laminate

The above coating agent was coated onto the surface of the above conductive substrate using an exclusive applicator, and after drying, maintained under an atmosphere at 150°C for 1 hour to obtain a pressure-sensitive responsive laminate.

### 4. Evaluation method

### (1) Hardness of substrate

A hardness Hs of the substrate (a material in the state on which no coating layer is provided) was measured. Here, the hardness Hs (Shore A) was measured by a Type A Durometer according to JIS K6253.

### (2) Surface roughness Rz

With regard to the surface (in the case of a single layer material, the surface opposed to the electrode base) at the coating layer side of the pressure-sensitive responsive laminate (in the case of Comparative examples 1 to 3 mentioned later, a single layer material), a ten-point average roughness Rz (µm) was measured according to JIS B0601 using a surface roughness state measuring machine.

### (3) Surface unevenness of coating layer

Based on the above-mentioned surface roughness Rz, the surface unevenness was evaluated based on the following standard.
A: Surface roughness Rz is 3 µm or more.
B: Surface roughness Rz is less than 3 µm.

### (4) F-R (Force-Resistivity) characteristics (pressure-sensitive responsivity)

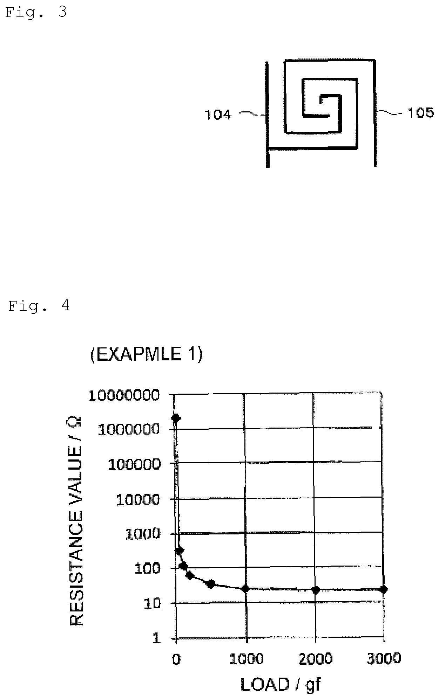

Fig. 2 is a schematic drawing explaining an evaluation apparatus of the F-R characteristics, and Fig. 3 is a schematic drawing explaining the shape of an electrode in the evaluation apparatus of Fig. 2.

As shown in Fig. 2, a pressure-sensitive responsive laminate (in the case of Comparative examples 1 to 3 mentioned later, a single layer material) 101 punched out with ϕ 6 mm was placed onto an electrode base 102 with 5 mm square having a pair of the electrodes on the upper surface thereof, and change in a resistance value at the surface of a coating layer (in the case of the single layer material, the surface opposed to the electrode base) to which a load had been applied was measured by a circuit element measuring device 103.

Here, a pair of the electrodes 104 and 105 is, as shown in Fig. 3, formed onto the surface of the electrode base 102 opposed to the coating layer surface in a spiral shape, a distance between the electrodes (a distance between the pair of the electrodes adjacently arranged in parallel) of the pair of the electrodes 104 and 105 is 0.5 mm, and a length of the respective electrodes (a value converted into a straight line) of the electrodes 104 and 105 is 25 mm.

A value in which the resistance value at the unloaded time was divided by the resistance value at the time of applying a load of 3 kgf was made a changed amount of the resistance value, and based on the measured changed amount of the resistance value, it was evaluated by the following evaluation standard.

### <Evaluation standard>

A: Changed amount of the resistance value is 6 digits (10⁶) or more.
B: Changed amount of the resistance value is less than 6 digits (10⁶) and 3 digits (10³) or more.
C: Changed amount of the resistance value is less than 3 digits (10³).

### (5) Repeated compression durability

To the pressure-sensitive responsive laminate (in the case of Comparative examples 1 to 3 mentioned later, a single layer material) punched out with ϕ 6 mm was repeated compression cycles with 1 kg and 2 Hz for 100,000 times, and then, a changed amount of the resistance value at the surface to which a load had been applied was measured in the same manner as in the above-mentioned measurement of the F-R characteristics, and evaluated with the same evaluation standard as the above-mentioned F-R characteristics.

The results mentioned above were shown in Table 1.

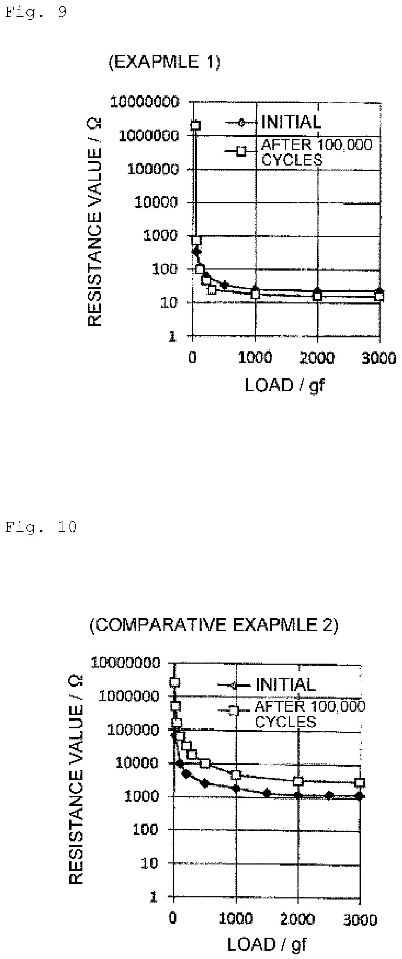

Also, a graph of the initial F-R characteristics is shown in Fig. 4, and a graph of the above initial one and F-R characteristics after repeated compression cycle is shown in Fig. 9, respectively.

### (Example 2)

In the same manner as in Example 1 except for changing the composition for the conductive substrate to the following composition, and providing a hardness Hs62 to the conductive substrate in Example 1, a pressure-sensitive responsive laminate was obtained.

**<Composition for conductive substrate>**

| | |
|---|---|
| •Silicone rubber for conduction (containing carbon black) | |
| "KE-3601SB-U" available from Shin-Etsu Chemical Co., Ltd. | |
| | 100 parts by weight |
| •Crosslinking agent | |
| "C-8A" (2,5-dimethyl-2,5-bis(t-butylperoxy)hexane | |
| content: 80 wt%) available from Shin-Etsu Chemical Co., | |
| Ltd. | |
| | 1.0 part by weight |

The results evaluated by the same evaluation method as in Example 1 were shown in Table 1.

### (Example 3)

In the same manner as in Example 1 except for setting the amount of the non-conductive particles to be the surface roughness Rz of the coating layer of 7 µm in Example 1, a pressure-sensitive responsive laminate was obtained.

The results evaluated by the same evaluation method as in Example 1 were shown in Table 1.

### (Example 4)

In the same manner as in Example 1 except for setting an amount of the non-conductive particles to be the surface roughness Rz of the coating layer of 30 µm in Example 1, a pressure-sensitive responsive laminate was obtained.

The results evaluated by the same evaluation method as in Example 1 were shown in Table 1.

### (Comparative example 1)

In the same manner as in Example 1 except for omitting formation of the coating layer, it was made a single layer material comprising a conductive substrate alone.

The results evaluated by the same evaluation method as in Example 1 were shown in Table 1.

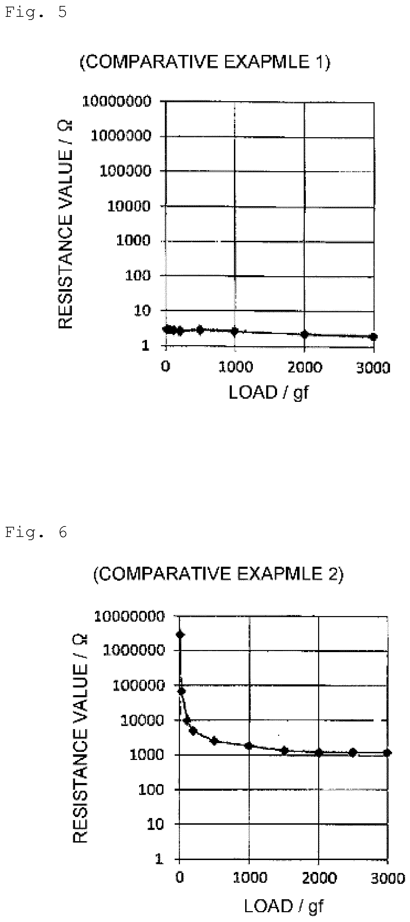

In addition, the graph of the initial F-R characteristics was shown in Fig. 5.

### (Comparative example 2)

Comparative example 2 is the following elastomer sheet (a single layer material) corresponding to Example 2 described in JP-A-2007-220481.

The surface roughness Rz of the obtained elastomer sheet was 15 µm.

The results evaluated by the same evaluation method as in Example 1 were shown in Table 1.

Also, a graph of the initial F-R characteristics is shown in Fig. 6, and a graph of the above initial one and F-R characteristics after repeated compression cycle is shown in Fig. 10, respectively.

### (Comparative example 3)

In the same manner as in Comparative example 2 except for changing the surface roughness Rz of the elastomer sheet in Comparative example 2 to 2 µm, an elastomer sheet (a single layer material) was obtained.

The results evaluated by the same evaluation method as in Example 1 were shown in Table 1.

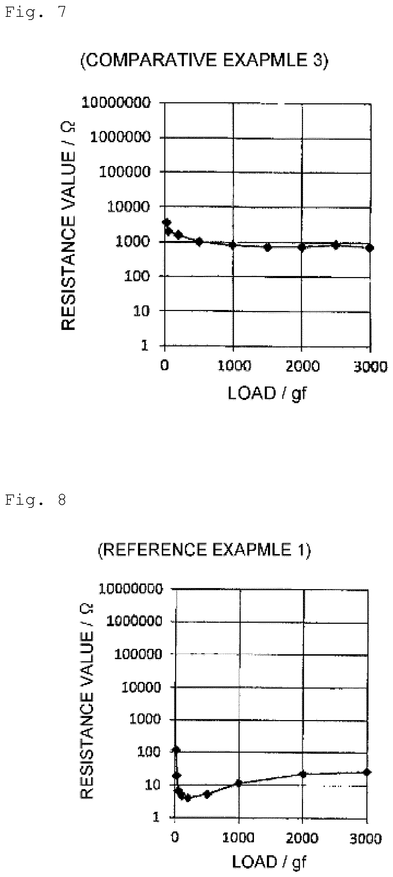

In addition, the graph of the initial F-R characteristics was shown in Fig. 7.

### (Reference example 1)

In the same manner as in Example 1 except for changing the composition for the conductive substrate in Example 1 to that mentioned below to impart a hardness Hs 29 to the conductive substrate, a pressure-sensitive responsive laminate was obtained.

**<Composition for conductive substrate>**

| | |
|---|---|
| •Silicone rubber | |
| "KE-1950-30-A" available from Shin-Etsu Chemical Co., Ltd. | |
| | 50 parts by weight |
| "KE-1950-30-B" available from Shin-Etsu Chemical Co., | |
| Ltd. | 50 parts by weight |
| •Carbon black | |
| "Ketjenblack EC600JD" available from Lion Corporation | |
| | 5 parts by weight |
| •SiH group-containing compound | |
| "X-93-916" available from Shin-Etsu Chemical Co., Ltd. | |
| | 1 part by weight |
| • Platinum catalyst | |
| "X-93-1410" available from Shin-Etsu Chemical Co., Ltd. | |
| | 0.2 part by weight |

The results evaluated by the same evaluation method as in Example 1 were shown in Table 1.

In addition, the graph of the initial F-R characteristics was shown in Fig. 8.

**[Table 1]**

| | Example 1 | Example 2 | Example 3 | Example 4 | Comparative example 1 | Comparative example 2 | Comparative example 3 | Reference example 1 |
|---|---|---|---|---|---|---|---|---|
| Hardness Hs of substrate | 79 | 62 | 79 | 79 | 79 | 45 | 43 | 29 |
| Coating layer | Present | Present | Present | Present | None | None | None | Present |
| Surface roughness Rz (µm) | 17 | 17 | 7 | 30 | 2 | 15 | 2 | 17 |
| Surface unevenness | A | A | A | A | B | A | B | A |
| F-R characteristics | A | A | A | A | C | A | C | B |
| Repeated compres sion durability | A | A | A | A | - | C | - | - |

### <Evaluation>

From Table 1 and Fig. 1, it can be understood that the pressure-sensitive responsive laminates of Examples 1 to 4 are excellent in F-R characteristics (pressure-sensitive responsivity), can lower the resistance value at conduction, and can ensure change in the resistance values at the unloaded time and at the time of applying a load with a large width. Further, it can be understood that these are excellent in durability at repeated use.

To the contrary, in Comparative example 1 which is a single layer material (conductive substrate alone) in which no coating layer has been provided, it can be understood that pressure-sensitive responsivity cannot be exhibited as shown in Table 1 and Fig. 5.

Also, in Comparative example 2 which is a single layer material in which conductive particles and non-conductive particles had been used in the insulating elastomer, it can be understood that the resistance value at conduction is relatively low but pressure-sensitive responsivity is exhibited as shown in Table 1 and Fig. 6. However, it can be understood that it is inferior in durability at the repeated use as shown in Fig. 10.

Further, in Comparative example 3 in which the surface unevenness of the single layer material of Comparative example 2 had been made small (the surface roughness Rz is changed from 15 µm to 2 µm), it can be understood that the pressure-sensitive responsivity is impaired as shown in Table 1 and Fig. 7. From these results, in such a single layer material, it can be understood that the surface unevenness is to be sufficiently formed for imparting the pressure-sensitive responsivity.

Reference example 1 is a sample in which the hardness Hs of the conductive substrate had been lowered to 29 in the pressure-sensitive responsive laminate, and under the present evaluation conditions, the pressure-sensitive responsivity can be obtained but increase in the resistance value can be observed at the high load region as shown in Table 1 and Fig. 8. Even when such a pressure-sensitive responsive laminate having a low substrate hardness is used, it is possible to stabilize the pressure-sensitive responsivity by, for example, adjusting the hardness of the non-conductive particles, or adjusting the hardness of the insulating substrate constituting the electrode base which is to be opposed to the pressure-sensitive responsive laminate or that of the pair of the electrodes (electrodes for detection).

### EXPLANATIONS OF LETTERS OR NUMERALS

- 1:: Pressure-sensitive responsible laminate
- 11:: Conductive substrate
- 12:: Coating layer
- 13:: Non-conductive particles
- 14:: Binder

## Claims

1. A pressure-sensitive responsive laminate which comprises a coating layer being laminated onto a conductive substrate, and unevenness derived from non-conductive particles included in the coating layer being formed onto a surface of the coating layer.

2. The pressure-sensitive responsive laminate according to claim 1, wherein the surface of the coating layer has a ten-point average roughness Rz in the range of 3 µm to 50 µm.

3. The pressure-sensitive responsive laminate according to claim 1 or 2, wherein the coating layer contains a silicone-based resin.

4. The pressure-sensitive responsive laminate according to any one of claims 1 to 3, wherein the conductive substrate contains a silicone rubber.

5. The pressure-sensitive responsive laminate according to any one of claims 1 to 4, wherein a hardness Hs of the conductive substrate is in the range of 40 to 90.

6. A coating layer which comprises non-conductive particles, unevenness derived from the non-conductive particles being formed onto a surface thereof, and pressure-sensitive responsivity being imparted by being laminated onto a conductive substrate.

7. A pressure-sensitive responsivity-imparting material which comprises non-conductive particles, and imparts pressure-sensitive responsivity by being coated onto a conductive substrate.

8. The pressure-sensitive responsivity-imparting material according to claim 7, wherein the material further comprises a liquid and/or a binder.

9. The pressure-sensitive responsivity-imparting material according to claim 7 or 8, wherein a concentration of a solid component is in the range of 10wt% to 20wt%.
